# EUROPÄISCHE PATENTSCHRIFT

(11) **EP 0 470 328 B1**
(45) Veröffentlichungstag und Bekanntmachung des Hinweises auf die Patenterteilung: **12.01.1994**
(21) Anmeldenummer: 91105122.5
(22) Anmeldetag: 30.03.1991
(51) Int. Cl.: F02M 35/024

(54) **Ansaugluftfilter für die Verbrennungskraftmaschine eines Fahrzeugs**
Intake air filter for vehicle internal combustion engine
Filtre à air d'aspiration pour moteur à combustion interne d'un véhicule

(30) Priorität: 06.08.1990 DE 9011419 U
(43) Veröffentlichungstag der Anmeldung: 12.02.1992
(73) Patentinhaber: FILTERWERK MANN & HUMMEL GMBH, D-71631 Ludwigsburg (DE)
(72) Erfinder: Benzler, Heinz, W-7141 Kirchberg/Murr (DE); Ernst, Volker, W-7123 Sachsenheim 1 (DE); Klotz, Arthur, W-7148 Remseck 5 (DE)
(74) Vertreter: Voth, Gerhard, Dipl.-Ing.

(56) Entgegenhaltungen:
- DE-A- 2 626 008
- DE-U- 7 321 762
- FR-A- 727 975
- US-A- 4 278 455

## Beschreibung

Die Neuerung betrifft ein Luftfilter gemäß dem Oberbegriff der Ansprüche 1 und 2.

Aus dem DE-U 73 21 762 ist ein Ansaugluftfilter für Brennkraftmaschinen, Kompressoren und sonstige luftansaugende Maschinen bekannt, welches zwei Filtereinsätze aufweist, wobei diese konzentrisch ineinander angeordnet sind. Zur Befestigung der Filtereinsätze ist ein im Reinluftstutzen verankerter zentraler Gewindebolzen vorgesehen, der durch die Öffnungen in die Abdeckscheiben hindurchgeführt ist und die Filtereinsätze mittels aufgeschraubter Gewindemuttern axial gegen die Gehäuseteile festspannt. Zur lagerichtigen Fixierung der Filtereinsätze sind an dem Bolzen Anschläge angeordnet, wobei die Abdeckscheiben an den Anschlägen aufliegen. Bei dieser Art der Befestigung ist eine sehr hohe Genauigkeit der Anschläge in Bezug auf die Auflagefläche der Filtereinsätze im Gehäuse erforderlich, außerdem ist diese hohe Genauigkeit auch bei dem Längenmaß der Filtereinsätze zu gewährleisten, um ein sicheres Abdichten der am Reinluftstutzen liegenden Stirnseite des Filtereinsatzes zu gewährleisten.

Diese hohe Genauigkeit führt bei den öfters auszutauschenden Filtereinsätzen zu unvertretbar hohen Kosten.

Ein weiterer Nachteil der Anordnung eines Gewindebolzens ist darin zu sehen, daß dieser Gewindebolzen innerhalb des Reinluftstutzens befestigt werden muß. Dies mag bei einem aus Blech hergestellten Gehäuse, beispielsweise durch Punktschweißen möglich sein. Ein Gehäuse, welches aus Kunststoff hergestellt ist und bei welchem der Reinluftstutzen in das Gehäuse integriert ist, läßt sich ein Gewindebolzen nur mit einem hohen Aufwand an Verstärkungsrippen, Metalleinlegeteilen u.ä. an dem Gehäuse befestigen. Selbst bei einer recht aufwendigen Konstruktion besteht die Gefahr, daß das Fließverhalten des Kunststoffs über einen längeren Zeitraum dazu führt, daß sich die Haltekräfte auf den Filtereinsatz verrringern und damit die Abdichtung zwischen Rohluftseite und Reinluftseite durch das Lösen des Filtereinsatzes nicht mehr gewährleistet ist.

Der Neuerung liegt deshalb die Aufgabe zugrunde, die genannten Nachteile zu vermeiden und ein Luftfilter, insbesondere mit einem Kunststoffgehäuse zu schaffen, in welchem eine einfache und zuverlässige Befestigung der Filtereinsätze möglich ist.

Diese Aufgabe wird ausgehend vom Oberbegriff der Ansprüche 1 und 2 durch deren kennzeichnende Merkmale gelöst.

Ein wesentlicher Vorteil der Erfindung ist der einfache Aufbau des Gehäuses, wobei lediglich an der Gehäusewand ein Gewinde erforderlich ist. Auch der Filtereinsatz benötigt keine zusätzlichen konstruktiven Elemente. Das Gewinde am Filtereinsatz kann beispielsweise durch eine entsprechend gestaltete Abdeckscheibe hergestellt werden. Die Einhaltung einer hohen Genauigkeit bezüglich der Längenabmessung des Filtereinsatzes ist ebenfalls nicht erforderlich, da die Dichtfläche unmittelbar im Bereich der Befestigungsstelle dieses Filtereinsatzes angeordnet werden kann.

Erfindungsgemäß ist vorgesehen, in dem rohrförmigen Ansatz, welcher den reinluftseitigen Ausgang des Filtergehäuses darstellt, ein Gewinde anzuordnen, wobei am Filtereinsatz ein kurzer Gewindeflansch zur Befestigung des zweiten Filtereinsatzes bzw. dieser Sicherheitspatrone vorgesehen ist. Zweckmäßigerweise ist das Gewinde als ein Halbrundgewinde ausgeführt. Dies erleichtert das Einschrauben der Sicherheitspatrone und ist besonders für die Anwendung an einem Kunststoffteil geeignet.

Gemäß einer alternativen Ausgestaltung der Erfindung kann auch an dem Gehäuse ein in den Innenraum sich erstreckender Ansatz vorgesehen sein, welcher mit dem Schraubgewinde versehen ist. In diesem Fall wird das Gegengewinde auf der Sicherheitspatrone an ihrem äußeren Umfang im Bereich der Stirnseite angeordnet sein. Weist das Gehäuse einen solchen rohrförmigen Ansatz auf, dann läßt sich in vorteilhafter Weise dieser auch als eine radiale Abdichtung für den ersten Filtereinsatz nutzen.

Gemäß einer weiteren vorteilhaften Ausgestaltung der Neuerung ist vorgesehen, zur Abdichtung der Sicherheitspatrone an der Stirnseite derselben eine Dichtung anzuordnen. Diese Dichtung ist als Axialdichtung ausgeführt und weist zweckmäßigerweise eine Dichtlippe auf, welche selbst größere axiale Abstände überbrücken kann, die beispielsweise bei unterschiedlich starken Einschraubkräften entstehen können.

Um zu vermeiden, daß bei sehr starken Erschütterungen oder Schwingungen sich die Sicherheitspatrone aus ihrer Verschraubung löst, wird nach einer weiteren vorteilhaften Ausgestaltung der Erfindung vorgeschlagen, diese Schraubverbindung mit einer Rastsperre zu kombinieren. Hierzu wird die Dichtung der Patrone mit einer entlang der Dichtfläche verlaufenden sägezahnförmigen Schuppung versehen. In gleicher Weise kann auch das Gehäuse an seiner Dichtfläche mit einer solchen Schuppung versehen sein. Wird die Patrone in das Gehäuse eingeschraubt, so rasten die Zähne der Dichtung in die entsprechenden Lücken des Gehäuses ein.

Aufgrund der Zahnform ist das Einschrauben der Patrone zwar ohne weiteres leicht möglich, das Herausschrauben der Patrone durch Erschütterungen oder Schwingungen wird jedoch wirksam verhindert. Ein Austausch der Patrone ist jedoch trotzdem möglich, da die gezahnte Dichtung nachgiebig ist und bei Aufbringung eines bestimmten Drehmoments auf die Sicherheitspatrone die Zähne der Dichtung aus den entsprechenden Ausnehmungen an dem Gehäuse herausgleiten.

Maßgebend für die Ausschraubkräfte ist die Form dieser Verzahnung. Je nach Art der auftretenden Erschütterungen und der zulässigen Ausschraubkräfte kann eine entsprechende Form dieser Rastung gewählt werden.

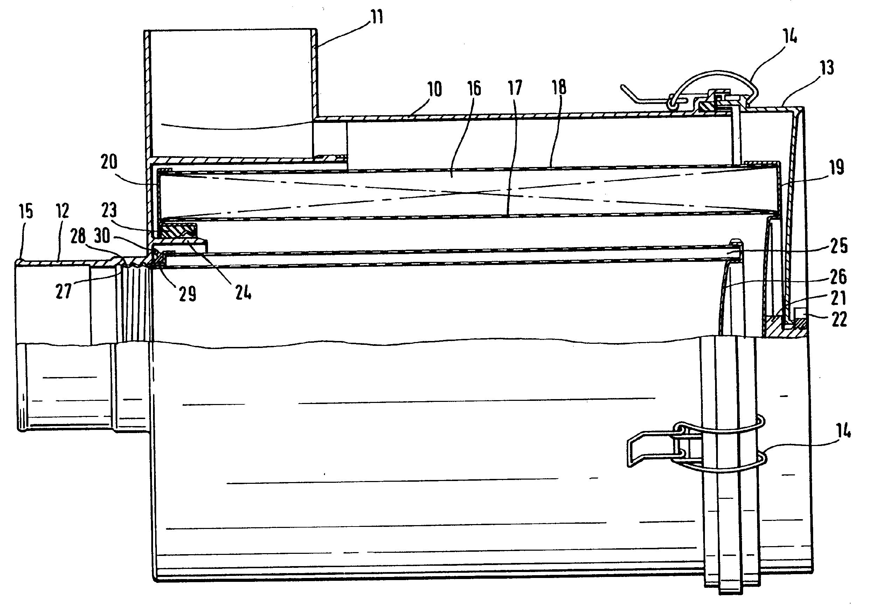

Die Neuerung wird nachfolgend anhand eines Ausführungsbeispiels näher erläutert. Die Figur zeigt einen Schnitt durch einen Ansaugluftfilter.

Das in der Figur gezeigte Ansaugluftfilter besteht aus einem Gehäuse 10, welches einen Rohlufteinlaß 11 und einen Reinluftauslaß 12 aufweist. Das Gehäuse ist an seinem dem Reinluftauslaß gegenüberliegenden Ende mit einem Gehäusedeckel 13 verschlossen. Mehrere am Umfang verteilt angeordnete Verschlüsse 14 sorgen für eine sichere Befestigung des Gehäusedeckels. Der Reinluftauslaß 12 des Gehäuses ist ein rohrförmiger Ansatz, der sich nach außen erstreckt und mit einem Ringwulst 15 versehen ist, zur Befestigung eines Ansaugschlauches oder ähnlichem.

Ein Filtereinsatz 16 besteht in bekannter Weise aus einem sternförmig gefalteten Filterpapier, welches zwischen einer inneren Stützhülse 17 und einer äußeren Stützhülse 18 angeordnet ist. Die Stirnflächen des Filtereinsatzes 16 sind mit Endscheiben 19, 20 geschlossen. Die Endscheibe 19 ist in ihrem Zentrum mit einem Schraubeinsatz 21 versehen. Über diesen Schraubeinsatz wird der Filtereinsatz 16 mit einer Flügelmutter 22 an dem Gehäusedeckel 13 angeschraubt. An der gegenüberliegenden Stirnseite ist der Einsatz 16 mit einer Endscheibe 20 versehen, die eine Radialdichtung 23 trägt. Diese Radialdichtung 23 liegt an einem nach innen gezogenen Ansatz 24 des Gehäuses 10 an. Innerhalb des Filtereinsatzes 16 befindet sich ein weiterer Filtereinsatz 25. Dieser ist eine sogenannte Sicherheitspatrone, die dazu dient, bei einem Wechsel des Filtereinsatzes 16 oder auch bei einem fehlenden Filtereinsatz 16 den Eintrag von Schmutz in die Reinluftseite des Filters wirksam zu verhindern. Diese Sicherheitspatrone ist an ihrer rückwärtigen Stirnseite mit einer Endscheibe 26 verschlossen.

An der dem Reinluftauslaß 12 zugewandten Stirnseite weist die Sicherheitspatrone einen rohrförmigen Flansch mit einem Außengewinde 27 auf. Mit diesem Gewinde wird die Sicherheitspatrone an dem Gehäuse, welches an dieser Stelle ein Gegengewinde 28 trägt, befestigt. Das Gewinde 28 ist zweckmäßigerweise ein Halbrundgewinde, welches besonders in einem Kunststoffgehäuse leicht herzustellen ist.

Zur axialen Abdichtung ist an der Sicherheitspatrone eine Dichtung 29 angeordnet. Diese Dichtung liegt stirnseitig an dem Dichtungsbereich 30 des Gehäuses 10 an.

Der Ansatz an dem Filtereinsatz 25, welcher das Gewinde 27 trägt, kann unmittelbar als Endscheibe des Filtereinsatzes 25 gestaltet sein. Es sind deshalb keine zusätzlichen Bauteile an der Sicherheitspatrone als Befestigungsmittel erforderlich.

## Patentansprüche

1. Ansaugluftfilter für die Verbrennungskraftmaschine eines Fahrzeugs mit zwei konzentrisch ineinander angeordneten, ringförmigen Filtereinsätzen (16, 25) innerhalb eines Gehäuses (10), welches einen rohluftseitigen Lufteinlaß (11) und einen reinluftseitigen Luftauslaß (12) aufweist, wobei ein erster äußerer Filtereinsatz (16) radial von außen nach innen durchströmt ist und innerhalb dieses ersten Filtereinsatzes (16) der zweite als Sicherheitspatrone ausgebildete Filtereinsatz (25) angeordnet ist, wobei dieser zweite Filtereinsatz (25) an einer Stirnseite mit einer Abdeckscheibe (26) verschlossen ist und wobei die andere Stirnseite des zweiten Filtereinsatzes (25) dem Luftauslaß (12) zugewandt ist, dadurch gekennzeichnet, daß der zweite Filtereinsatz (25) an dem Gehäuse (10) im Bereich des Luftauslasses (12) mittels eines Gewindes befestigt ist, wobei der zweite Filtereinsatz (25) einen rohrförmigen Ansatz an der offenen Stirnseite aufweist, welcher mit einem Gewinde (27) versehen ist und welches in ein in dem Luftauslaß (12) angeordnetes Gegengewinde (28) eingreift.

2. Ansaugluftfilter für die Verbrennungskraftmaschine eines Fahrzeugs mit zwei konzentrisch ineinander angeorndeten, ringförmigen Filtereinsätzen (16, 25) innerhalb eines Gehäuses (10), welches eien rohluftseitigen Lufteinlaß (11) einen reinluftseitigen Luftauslaß (12) aufweist, wobei ein erster äußerer Filtereinsatz (16) radial von außen nach innen durchströmt ist und innerhalb dieses ersten Filtereinsatzes (16) der zweite als Sicherheitspatrone ausgebildete Filtereinsatz (25) angeordnet ist, wobei dieser zweite Filtereinsatz (25) an einer Stirnseite mit einer Abdeckscheibe (26) verschlossen ist und wobei die andere Stirnseite des zweiten Filtereinsatzes (25) dem Luftauslaß (12) zugewandt ist, dadurch gekennzeichnet, daß der zweite Filtereinsatz (25) an dem Gehäuse (10) im Bereich des Luftauslasses (12) mittels eines Gewindes befestigt ist, wobei an dem Gehäuse (10) konzentrisch zu dem ersten Filtereinsatz (18) ein rohrförmiger Ansatz (24) angeordnet ist, welcher sich in das Innere des Gehäuses (10) erstreckt und ein Gewinde trägt, wobei ein an dem zweiten Filtereinsatz (25) angeordnetes Gegengewinde in das Gewinde des Ansatzes (24) eingreift zur Befestigung dieses Einsatzes (25) an dem Gehäuse (10).

3. Ansaugluftfilter nach Anspruch 2, dadurch gekennzeichnet, daß der rohrförmige Ansatz (24) des Gehäuses (10) an seinem äußeren Umfang mit einer Dichtfläche versehen ist, und daß der erste Filtereinsatz (16) mit einer an diesem angeordneten Dichtung (23) auf dem rohrförmigen Ansatz befestigt ist.

4. Ansaugluftfilter nach einem der vorhergehenden Ansprüche, dadurch gekennzeichnet, daß der zweite Filtereinsatz (25) an der dem Luftauslaß (12) zugewandten Stirnfläche eine Dichtfläche aufweist, die mit einer Dichtung (29) versehen ist und welcher an einer Dichtfläche (30) des Gehäuses (10) anliegt.

5. Ansaugluftfilter nach Anspruch 4, dadurch gekennzeichnet, daß die Dichtung (29) mit einer der Dichtfläche des Gehäuses zugewandten Schuppung versehen ist und/oder die Dichtfläche (30) des Gehäuses (10) eine Schuppung aufweist, zur Sicherung des zweiten Filtereinsatzes (25) an dem Gehäuse (10).

## Claims

1. Air inlet filter for the internal combustion engine of a vehicle, including two annular filter inserts (16, 25), which are concentrically disposed one inside the other, internally of a housing (10), which comprises an air inlet (11) at the unfiltered air end and an air outlet (12) at the filtered air end, a first outer filter insert (16) being radially traversed from externally inwardly, and the second filter insert (25), in the form of a safety cartridge, being disposed inwardly of the first filter insert (16), said second filter insert (25) being terminated at one end face by a cover plate (26), and the other end face of the second filter insert (25) facing the air outlet (12), characterised in that the second filter insert (25) is mounted on the housing (10) in the region of the air outlet (12) by means of a screw-thread, the second filter insert (25) comprising a tubular extension member at the open end face, which extension member is provided with a screw-thread (27), which engages in a counter-thread (28) disposed in the air outlet (12).

2. Air inlet filter for the internal combustion engine of a vehicle, including two annular filter inserts (16, 25), which are concentrically disposed one inside the other, internally of a housing (10), which comprises an air inlet (11) at the unfiltered air end and an air outlet (12) at the filtered air end, a first outer filter insert (16) being radially traversed from externally inwardly, and the second filter insert (25), in the form of a safety cartridge, being disposed inwardly of the first filter insert (16), said second filter insert (25) being terminated at one end face by a cover plate (26), and the other end face of the second filter insert (25) facing the air outlet (12), characterised in that the second filter insert (25) is mounted on the housing (10) in the region of the air outlet (12) by means of a screw-thread, a tubular extension member (24) being disposed on the housing (10) concentrically relative to the first filter insert (16), which extension member extends into the interior of the housing (10) and is provided with a screw-thread, a counter-thread disposed on the second filter insert (25) engaging in the screw-thread of the extension member (24) for the mounting of this insert (25) on the housing (10)

3. Air inlet filter according to claim 2, characterised in that the tubular extension member (24) of the housing (10) is provided with a sealing face on its external periphery, and in that the first filter insert (16) is mounted on the tubular extension member by means of a seal (23), which is disposed on said first filter insert.

4. Air inlet filter according to one of the preceding claims, characterised in that the second filter insert (25) has, at the end face facing the air outlet (12), a sealing face which is provided with a seal (29), and said second filter insert abuts against a sealing face (30) of the housing (10).

5. Air inlet filter according to claim 4, characterised in that the seal (29) is provided with serrations facing the sealing face of the housing, and/or the sealing face (30) of the housing (10) has serrations, for securing the second filter insert (25) on the housing (10).

## Revendications

1. Filtre à air d'aspiration pour moteur à combustion interne équipant un véhicule automobile, comportant deux garnitures de filtre (16, 25) annulaires, placées concentriquement l'une dans l'autre, logées dans un boîtier (10) muni d'une entrée d'air non purifié (11) et d'une sortie d'air purifié (12), dans lequel une première garniture de filtre (16), extérieure, étant traversée radialement de l'extérieur vers l'intérieur et la seconde garniture de filtre (25) en forme de cartouche de sécurité étant logée à l'intérieur de cette première garniture de filtre (16), cette seconde garniture de filtre (25) étant fermée au niveau d'une face frontale par un disque de recouvrement (26) et en ce que l'autre face frontale de la seconde garniture de filtre (25) est tournée vers la sortie d'air (12), filtre caractérisé en ce que la seconde garniture de filtre (25) est fixée sur le boîtier (10) au niveau de la sortie d'air (12) à l'aide d'un filetage, la seconde garniture de filtre (25) ayant un prolongement tubulaire dans sa face frontale ouverte, ce prolongement étant muni d'un filetage (27) dans lequel se visse un filetage correspondant (28) de la sortie d'air (12).

2. Filtre d'air d'aspiration pour moteur thermique d'un véhicule automobile comportant deux garnitures de filtre (16, 25) annulaires, placées concentriquement l'une dans l'autre à l'intérieur d'un boîtier (10) ayant une entrée d'air chargé (11) et une sortie d'air nettoyé (12), filtre dans lequel une première garniture de filtre extérieur (16) est traversée radialement de l'extérieur vers l'intérieur et cette première garniture de filtre (16) reçoit la seconde garniture de filtre (25) en forme de cartouche de sécurité, cette seconde garniture de filtre (25) étant fermée au niveau d'une face frontale par un disque de recouvrement (26) et l'autre face frontale de la seconde garniture de filtre (25) est tournée vers la sortie d'air (12), filtre caractérisé en ce que la seconde garniture de filtre (25) est fixée au boîtier (10) au niveau de la sortie d'air (12) à l'aide d'un filetage et sur le boîtier (10) concentriquement à la première garniture de filtre (18) il est prévu un prolongement tubulaire (24) qui traverse l'intérieur du boîtier (10) et porte un filetage, un filetage correspondant porté par la seconde garniture de filtre (25) étant en prise dans le filetage du prolongement (24) pour fixer cette garniture (25) sur le boîtier (10).

3. Filtre d'air d'aspiration selon la revendication 2, caractérisé en ce que le prolongement tubulaire (24) du boîtier (10) est muni à sa surface périphérique extérieure, d'une surface d'étanchéité et la première garniture de filtre (16) est fixée sur le prolongement tubulaire par un joint (23) portée par celui-ci.

4. Filtre d'air d'aspiration selon l'une des revendications précédentes, caractérisé en ce que la seconde garniture de filtre (25) comporte au niveau de sa surface frontale tournée vers la sortie d'air (12), une surface d'étanchéité munie d'un joint (29) qui s'applique contre une surface d'étanchéité (30) du boîtier (10).

5. Filtre d'air d'aspiration selon la revendication 4, caractérisé en ce que le joint (29) est muni d'éléments en lamelles tournés vers la surface d'étanchéité du boîtier et/ou la surface d'étanchéité (30) du boîtier (10) comporte une partie en lamelles pour fixer la seconde garniture de filtre (25) sur le boîtier (10)
